# EUROPEAN PATENT SPECIFICATION

(11) **EP 4 174 981 B1**
(45) Date of publication and mention of the grant of the patent: **06.08.2025**
(21) Application number: 21862148.0
(22) Date of filing: 30.08.2021
(51) Int. Cl.: H01M 4/131, H01M 4/48, H01M 4/62, H01M 4/36, H01M 10/052, H01M 4/02

(54) **NEGATIVE ELECTRODE AND SECONDARY BATTERY COMPRISING THE NEGATIVE ELECTRODE**
NEGATIVELEKTRODE UND SEKUNDÄRBATTERIE MIT DER NEGATIVELEKTRODE
ÉLECTRODE NÉGATIVE ET BATTERIE SECONDAIRE COMPRENANT L'ÉLECTRODE NÉGATIVE

(30) Priority: 28.08.2020 KR 20200109527
(43) Date of publication of application: 03.05.2023
(73) Proprietor: LG Energy Solution, Ltd., Seoul 07335 (KR)
(72) Inventor: LEE, Su Min, Daejeon 34122 (KR); LEE, Yong Ju, Daejeon 34122 (KR); SHIN, Sun Young, Daejeon 34122 (KR); CHOI, Jung Hyun, Daejeon 34122 (KR); JUN, Hyun Min, Daejeon 34122 (KR)
(74) Representative: Hoffmann Eitle
(86) International application number: PCT/KR2021/011601
(87) International publication number: WO 2022/045852

(56) References cited:
- EP-A1- 2 559 660
- JP-A- 2015 167 127
- KR-A- 20130 018 498
- KR-A- 20180 120 486
- KR-A- 20190 065 172
- KR-A- 20200 012 779
- US-A1- 2020 035 992
- US-A1- 2020 243 848

## Description

### TECHNICAL FIELD

### Cross-reference to Related Applications

This application claims priority from Korean Patent Application No. 10-2020-0109527, filed on August 28, 2020.

### Technical Field

The present invention relates to a negative electrode comprising different types of silicon-based particles and carbon nanotubes and a secondary battery comprising the same.

### BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity, have been subjected to considerable research and have been commercialized and widely used.

In general, a secondary battery is composed of a positive electrode, a negative electrode, an electrolyte, and a separator. The negative electrode includes a negative electrode active material in which lithium ions from the positive electrode are intercalated and deintercalated, and silicon-based particles having high discharge capacity may be used as the negative electrode active material. However, the silicon-based particle has low initial efficiency, and its volume changes excessively during a charge and discharge process. Thus, there is a limitation in that lifetime of the battery is reduced. Particularly, since cracks occur in the silicon-based particle as charge and discharge cycles are repeated, mechanical stability degrades while the lifetime is reduced.

Typically, in order to address this limitation, techniques of forming a carbon coating layer on surfaces of the silicon-based particles have been used. However, even if the carbon coating layer is formed, the initial efficiency and the reduction in the lifetime of the battery are not significantly improved, and an effect of reducing battery resistance is not significant. Also, a method of controlling physical properties of a binder or a thickener so that the silicon-based particles are not exfoliated from the negative electrode has been used, but its effect is not large.

Thus, there is a need for a negative electrode which uses silicon-based active material particles, but may improve life characteristics. EP 2 555 660 A1 discloses a negative electrode which comprises two types of silicon oxide powder materials.

### DISCLOSURE OF THE INVENTION

### TECHNICAL PROBLEM

An aspect of the present invention provides a negative electrode which may improve life characteristics of a battery.

Another aspect of the present invention provides a secondary battery comprising the negative electrode.

### TECHNICAL SOLUTION

According to an aspect of the present invention, there is provided a negative electrode which includes a negative electrode active material layer comprising a negative electrode active material and a conductive agent, wherein the negative electrode active material includes a first active material and a second active material, wherein the first active material includes SiOₓ particles (0<x<2), and the second active material includes SiO_{y} particles (0<y<2), wherein the SiOₓ particles have a D₅₀ of 0.1 µm to 0.6 µm, the SiO_{y} particles have a D₅₀ of 3 µm to 8 µm, a weight ratio of the SiOₓ particles to the SiO_{y} particles is in a range of 1:2 to 1:100, and the conductive agent includes single-walled carbon nanotubes.

According to another aspect of the present invention, there is provided a secondary battery comprising the negative electrode.

### ADVANTAGEOUS EFFECTS

According to the present invention, since a negative electrode includes an appropriate amount of different types of silicon-based particles (SiOₓ particles, SiO_{y} particles) having specific sizes, a contact area between the silicon-based particles is increased to facilitate movement of electrons in the negative electrode, and thus, life characteristics of a battery may be improved. Also, since single-walled carbon nanotubes electrically and physically connect the silicon-based particles to each other, the life characteristics of the battery may be further improved.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include", "comprise", or "have" when used in this specification, specify the presence of stated features, numbers, steps, elements, or combinations thereof, but do not preclude the presence or addition of one or more other features, numbers, steps, elements, or combinations thereof.

The expression "D₅₀" in the present specification may be defined as a particle diameter at a cumulative volume of 50% in a particle size distribution curve of particles. The D₅₀, for example, may be measured by using a laser diffraction method. The laser diffraction method may generally measure a particle diameter ranging from a submicron level to a few mm and may obtain highly repeatable and high-resolution results.

In the present specification, a specific surface area was measured by degassing at 200°C for 8 hours and performing N₂ adsorption/desorption at 77K using a Brunauer-Emmett-Teller (BET) measuring instrument (BEL-SORP-MAX, Nippon Bell).

A negative electrode according to the present invention includes a negative electrode active material layer comprising a negative electrode active material and a conductive agent, wherein the negative electrode active material includes a first active material and a second active material, wherein the first active material includes SiOₓ particles (0<x<2), and the second active material includes SiO_{y} particles (0<y<2), wherein the SiOₓ particles have a D₅₀ of 0.1 µm to 0.6 µm, the SiO_{y} particles have a D₅₀ of 3 µm to 8 µm, a weight ratio of the SiOₓ particles to the SiO_{y} particles is in a range of 1:2 to 1:100, and the conductive agent may include single-walled carbon nanotubes.

The negative electrode includes a negative electrode active material layer.

The negative electrode active material layer may be disposed on a current collector, and alternatively, the negative electrode active material layer itself may be the negative electrode.

The current collector is not particularly limited so long as it has conductivity without causing adverse chemical changes in the battery. For example, copper, stainless steel, aluminum, nickel, titanium, fired carbon, aluminum or stainless steel that is surface-treated with one of carbon, nickel, titanium, silver, or the like may be used as the current collector. Specifically, a transition metal that adsorbs carbon well, such as copper and nickel, may be used as the current collector. The current collector may have a thickness of 6 µm to 20 µm, but the thickness of the current collector is not limited thereto.

The negative electrode active material layer may be disposed on one surface or both surfaces of the current collector.

The negative electrode active material layer includes a negative electrode active material and a conductive agent.

The negative electrode active material includes a first active material and a second active material.

The first active material includes SiOₓ particles (0<x<2), and may be specifically composed of SiOₓ particles (0<x<2). The second active material includes SiO_{y} particles (0<y<2) and may be specifically composed of SiO_{y} particles (0<y<2). x and y correspond to a ratio of the number of oxygen (O) atoms to silicon (Si) atoms included in the SiOₓ particle (0<x<2) and the SiO_{y} particle (0<y<2), respectively. Capacity of the battery may be improved by using the SiOₓ particle (0<x<2) and the SiO_{y} particle (0<y<2).

The SiOₓ particles (0<x<2) have a D₅₀ of 0.1 µm tc 0.6 µm, for example, 0.2 µm to 0.4 µm. In a case in which the D₅₀ of the SiOₓ particles (0<x<2) is less than 0.1 µm, since its specific surface area is excessively large, a side reaction with an electrolyte solution occurs severely, and thus, life characteristics of the battery are degraded. In contrast, in a case in which the D₅₀ of the SiOₓ particles (0<x<2) is greater than 0.6 µm, since an effect of increasing a contact area between the particles may not be expected when the SiOₓ particles are mixed with the SiO_{y} particles (0<y<2), the life characteristics of the battery are degraded.

The SiO_{y} particles (0<y<2) have a D₅₀ of 3 µm to 8 µm, for example, 5.2 µm to 7 µm. In a case in which the D₅₀ of the SiO_{y} particles (0<y<2) is less than 3 µm, since the effect of increasing the contact area between the particles may not be expected when the SiO_{y} particles are mixed with the SiOₓ particles (0<x<2), the life characteristics of the battery are degraded. In contrast, in a case in which the D₅₀ of the SiO_{y} particles (0<y<2) is greater than 8 µm, since a variation of volume during charge and discharge of the battery is excessively large, the life characteristics of the battery are degraded.

A ratio of the D₅₀ of the SiOₓ particles to the D₅₀ of the SiO_{y} particles may be in a range of 1:5 to 1:40, particularly 1:7 to 1:37, and more particularly 1:15 to 1:35. In a case in which the ratio satisfies the above range, since the contact area between the SiOₓ particles and the SiO_{y} particles may satisfy the most desirable level, the life characteristics of the battery may be more effectively improved.

A weight ratio of the SiOₓ particles to the SiO_{y} particles is in a range of 1:2 to 1:100, particularly 1:10 to 1:50, and more particularly 1:10 to 1:20. In a case in which the weight ratio of the SiOₓ particles to the SiO_{y} particles is outside the range of 1:2 to 1:100, since the contact area between the SiOₓ particles and the SiO_{y} particles is not sufficient, the life characteristics of the battery are degraded.

A specific surface area of the SiOₓ particles may be in a range of 1 m²/g to 10 m²/g, for example, 2 m²/g to 7 m²/g. A specific surface area of the SiO_{y} particles may be in a range of 4 m²/g to 20 m²/g, for example, 9 m²/g to 18 m²/g. When the above ranges are satisfied, since the contact area between the SiOₓ particles and the SiO_{y} particles may satisfy the most desirable level, the life characteristics of the battery may be more effectively improved.

The conductive agent may include single-walled carbon nanotubes, and the conductive agent may be specifically composed of single-walled carbon nanotubes.

The single-walled carbon nanotubes may have an average diameter of 1 nm to 30 nm, for example, 5 nm to 12 nm. When the average diameter satisfies the above range, since flexibility of the single-walled carbon nanotubes is high, a conductive network between the SiOₓ particles and the SiO_{y} particles may be more effectively formed, and thus, the life characteristics of the battery may be more effectively improved. After diameters of 100 single-walled carbon nanotubes in the negative electrode are measured through a scanning electron microscope (SEM), the average diameter may be obtained by averaging the diameters.

The single-walled carbon nanotubes may have an average length of 2 µm to 100 µm, for example, 3 µm to 12 µm. When the average length satisfies the above range, since the conductive network connecting the SiOₓ particles and the SiO_{y} particles may be easily maintained even if volumes of the SiOₓ particles and the SiO_{y} particles change, the life characteristics of the battery may be improved. After lengths of 100 single-walled carbon nanotubes in the negative electrode are measured through an SEM, the average length may be obtained by averaging the lengths.

The single-walled carbon nanotubes may have a specific surface area of 500 m²/g to 1,500 m²/g, for example, 600 m²/g to 1,000 m²/g. When the specific surface area satisfies the above range, since the single-walled carbon nanotubes may minimize the side reaction with the electrolyte solution while having high flexibility, the life characteristics of the battery may be further improved.

The single-walled carbon nanotubes may be included in an amount of 0.001 wt% to 0.5 wt% in the negative electrode active material layer, and may be specifically included in an amount of 0.02 wt% to 0.1 wt%. In a case in which the above range is satisfied, the conductive network connecting the SiOₓ particles and the SiO_{y} particles may be effectively formed, and the side reaction with the electrolyte solution may be minimized.

The negative electrode active material layer may further include a binder.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

A secondary battery according to another embodiment of the present invention may include the negative electrode of the above-described embodiment. Specifically, the secondary battery may include the negative electrode of the above-described embodiment, a positive electrode, a separator disposed between the positive electrode and the negative electrode, and an electrolyte, wherein the negative electrode is the same as the above-described negative electrode. Since the negative electrode has been described above, detailed descriptions thereof will be omitted.

The positive electrode may include a positive electrode current collector and a positive electrode active material layer which is formed on the positive electrode current collector and includes the positive electrode active material.

In the positive electrode, the positive electrode current collector is not particularly limited as long as it has conductivity without causing adverse chemical changes in the batteries, and, for example, stainless steel, aluminum, nickel, titanium, fired carbon, or aluminum or stainless steel that is surface-treated with one of carbon, nickel, titanium, or silver may be used. Also, the positive electrode current collector may typically have a thickness of 3 µm to 500 µm and may have a surface with fine roughness to improve adhesion to the positive electrode active material. The positive electrode current collector may be used in various shapes, for example, a film, a sheet, a foil, a net, a porous body, a foam body, a non-woven fabric body, and the like.

The positive electrode active material may be a typically used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; nickel (Ni)-site type lithium nickel oxide expressed by a chemical formula of LiNi_{1-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of Li being substituted with alkaline earth metal ions, but the positive electrode active material is not limited thereto. The positive electrode may be Li-metal.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the positive electrode conductive agent may be graphite such as natural graphite and artificial graphite; a carbon-based material such as carbon black, acetylene black, Ketjen black, channel black, furnace black, lamp black, thermal black, and carbon fibers; metal powder or metal fibers of metal such as copper, nickel, aluminum, and silver; conductive whiskers such as zinc oxide whiskers and potassium titanate whiskers; conductive metal oxide such as titanium oxide; or conductive polymers such as polyphenylene derivatives, and one alone or a mixture of two or more thereof may be used.

Also, the positive electrode binder functions to improve binding between positive electrode active material particles and adhesion between the positive electrode active material and the positive electrode current collector. Specific examples of the positive electrode binder may be polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber (SBR), a fluoro rubber, or various copolymers thereof, and one alone or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator comprising a ceramic component or a polymer component may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide , dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, since ethylene carbonate and propylene carbonate, ring-type carbonates among the carbonate-based organic solvents, well dissociate a lithium salt due to high dielectric constants as high-viscosity organic solvents, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, any one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

According to another embodiment of the present invention, the first active material may be the same as the negative electrode of the above-described embodiment except that it includes a carbon coating layer disposed on the SiOₓ particle.

The carbon coating layer may include a carbon-based material. The carbon-based material may include at least one of amorphous carbon and crystalline carbon.

The crystalline carbon may further improve conductivity of the negative electrode active material. The crystalline carbon may include at least one selected from the group consisting of fullerenes, carbon nanotubes, and graphene.

The amorphous carbon may suppress expansion of the core by appropriately maintaining strength of the carbon coating layer. The amorphous carbon may be a carbide of at least one selected from the group consisting of tar, pitch, and other organic materials, or may be a carbon-based material formed by using a hydrocarbon as a source of chemical vapor deposition.

The carbide of the other organic materials may be a carbide of sucrose, glucose, galactose, fructose, lactose, mannose, ribose, aldohexose, or ketohexose, and a carbide of an organic material selected from a combination thereof.

The hydrocarbon may be a substituted or unsubstituted aliphatic or alicyclic hydrocarbon, or a substituted or unsubstituted aromatic hydrocarbon. The substituted or unsubstituted aliphatic or alicyclic hydrocarbon may include methane, ethane, ethylene, acetylene, propane, butane, butene, pentane, isobutane, or hexane. The substituted or unsubstituted aromatic hydrocarbon may include benzene, toluene, xylene, styrene, ethylbenzene, diphenylmethane, naphthalene, phenol, cresol, nitrobenzene, chlorobenzene, indene, coumarone, pyridine, anthracene, or phenanthrene.

The carbon coating layer may have a thickness of 1 nm to 1,000 nm, particularly 50 nm to 800 nm, and more particularly 100 nm to 500 nm. In a case in which the above range is satisfied, the life characteristics and output characteristics of the battery may be further improved. Although not limited thereto, the thickness of the carbon coating layer may be measured by an SEM or a transmission electron microscope (TEM).

According to another embodiment of the present invention, the second active material may be the same as the negative electrode of the above-described embodiment except that it includes a carbon coating layer disposed on the SiO_{y} particle. The carbon coating layer may be the same as the carbon coating layer of the above-described embodiment.

According to another embodiment of the present invention, the first active material and the second active material may be the same as the negative electrode of the above-described embodiment except that the first active material includes a carbon coating layer disposed on the SiOₓ particle and the second active material includes a carbon coating layer disposed on the SiO_{y} particle. The carbon coating layer may be the same as the carbon coating layer of the above-described embodiment.

According to another embodiment of the present invention, the first active material may further include a metal disposed or distributed on a surface, inside, or the surface and the inside of the SiOₓ particle. Specifically, the first active material may further include a metal doped inside the SiOₓ particle.

Since the metal may control volume expansion/contraction of the SiOₓ particle to an appropriate level by being distributed on the surface and/or the inside of the SiOₓ particle, the metal may play a role in preventing damage to the first active material. Also, the metal may be included in the first active material in terms of increasing efficiency of the first active material by reducing a ratio of an irreversible phase (e.g., SiO₂) of the SiOₓ particle.

The metal may include at least one selected from the group consisting of lithium (Li), magnesium (Mg), calcium (Ca), and aluminum (Al). In terms of the fact that volume expansion control of the SiOₓ particle, damage prevention, and initial efficiency improvement effect may be achieved at an excellent level, the metal may specifically include at least one selected from the group consisting of Li and Mg, and may more specifically include Mg.

The metal may be included in an amount of 0.1 wt% to 30 wt%, for example, 2 wt% to 6 wt% in the first active material. When the amount of the metal is within the above range, the effect of improving the initial efficiency of the first active material may be achieved at an excellent level.

In a case in which the first active material includes the metal, the first active material may be prepared by a method comprising the steps of: generating a first vapor by vaporizing a compound represented by SiOₐ (0<a<2); generating a second vapor by vaporizing a metal comprising at least one selected from the group consisting of Li, Mg, Ca, and Al; mixing the first vapor and the second vapor to perform a gas phase reaction; obtaining powder by cooling after the gas phase reaction; and adjusting D₅₀ of the powder to 0.1 µm to 0.6 µm, but the present invention is not limited thereto. The adjustment of the D₅₀ of the powder, for example, may be performed using an airflow grinding method, but is not limited thereto.

According to another embodiment of the present invention, the second active material may further include a metal disposed or distributed on a surface, inside, or the surface and the inside of the SiO_{y} particle. Specifically, the second active material may further include a metal doped inside the SiO_{y} particle.

Since the metal may control volume expansion/contraction of the SiO_{y} particle to an appropriate level by being distributed on the surface and/or the inside of the SiO_{y} particle, the metal may play a role in preventing damage to the second active material. Also, the metal may be included in the second active material in terms of increasing efficiency of the second active material by reducing a ratio of an irreversible phase (e.g., SiO₂) of the SiO_{y} particle.

The metal may include at least one selected from the group consisting of Li, Mg, Ca, and Al. In terms of the fact that volume expansion control of the SiO_{y} particle, damage prevention, and initial efficiency improvement effect may be achieved at an excellent level, the metal may specifically include at least one selected from the group consisting of Li and Mg, and may more specifically include Mg.

The metal may be included in an amount of 0.1 wt% to 30 wt%, for example, 2 wt% to 15 wt% in the second active material. When the amount of the metal is within the above range, the effect of improving the initial efficiency of the second active material may be achieved at an excellent level.

In a case in which the second active material includes the metal, the second active material may be prepared by a method comprising the steps of: generating a first vapor by vaporizing a compound represented by SiO_{b} (0<b<2); generating a second vapor by vaporizing a metal comprising at least one selected from the group consisting of Li, Mg, Ca, and Al; mixing the first vapor and the second vapor to perform a gas phase reaction; obtaining powder by cooling after the gas phase reaction; and adjusting D₅₀ of the powder to 0.3 µm to 8 µm, but the present invention is not limited thereto.

According to another embodiment of the present invention, the negative electrode active material may be the same as the negative electrode of the above-described embodiment except that it further includes a carbon-based active material.

The carbon-based active material may be at least one selected from the group consisting of artificial graphite, natural graphite, graphitized carbon fibers, and graphitized mesocarbon microbeads.

A total amount of the first active material particles and the second active material particles and an amount of the carbon-based active material in the negative electrode active material may have a weight ratio of 1:99 to 70:30, for example, 5:95 to 30:70. When the above range is satisfied, charge and discharge characteristics of the battery are further improved, and the life characteristics of the battery may be further improved due to excellent electrical conductivity of the carbon-based active material.

According to another embodiment of the present invention, a battery module comprising the secondary battery as a unit cell and a battery pack comprising the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope of the appended claims.

### Examples

### Example 1: Preparation of Battery

### (1) Formation of Negative Electrode

A mixture (weight ratio of 1:19) of first SiO (first active material) having a D₅₀ of 0.2 µm and second SiO (second active material) having a D₅₀ of 7 µm was used as a negative electrode active material. Carboxymethyl cellulose (CMC) and a styrene butadiene rubber (SBR) were used as a binder. Single-walled carbon nanotubes having an average diameter of 5 nm and an average length of 8 µm were used as a conductive agent.

A carbon nanotube dispersion, in which the single-walled carbon nanotubes were dispersed in CMC as a solvent, was prepared. The negative electrode active material, the binder, and the carbon nanotube dispersion were added to water, as a solvent, and then mixed to prepare a negative electrode slurry.

The negative electrode slurry was coated on a 20 µm thick copper (Cu) metal thin film, as a negative electrode current collector, and then dried. In this case, a temperature of circulating air was 60°C. Subsequently, the negative electrode current collector coated with the negative electrode slurry was roll-pressed, dried in a vacuum oven at 130°C for 12 hours, and then punched into a circle having an area of 1.4875 cm² to prepare a negative electrode.

A total amount of the first SiO and the second SiO in the negative electrode was 95.4 wt%.

### (2) Preparation of Battery

A lithium (Li) metal thin film cut into a circle of 1.7671 cm² was used as a positive electrode. A porous polyethylene separator was disposed between the positive electrode and the negative electrode, and an electrolyte solution, in which 0.5 wt% of vinylene carbonate was dissolved in a mixed solution, in which a mixed volume ratio of ethyl methyl carbonate (EMC) to ethylene carbonate (EC) was 7:3, and 1 M LiPF₆ was dissolved, was injected to prepare a lithium coin half-cell.

### Examples 2 to 8 and Comparative Examples 1 to 11: Preparation of Battery

Batteries were prepared in the same manner as in Example 1 except that conditions were modified as illustrated in Tables 1 and 2 below.

### Example 9: Preparation of Battery

A negative electrode and a battery of Example 9 were prepared in the same manner as in Example 1 except that the following first active material and second active material were used instead of the first SiO and second SiO used in Example 1.

As the first active material, SiO (average particle diameter (D₅₀): 0.2 µm), in which Mg was distributed or doped on a surface and/or inside thereof, was prepared. 6 wt% of Mg was included in the first active material.

Also, as the second active material, SiO (average particle diameter (D₅₀): 7 µm), in which Mg was distributed or doped on a surface and/or inside thereof, was prepared. 6 wt% of Mg was included in the second active material.

**[Table 1]**

| | Negative electrode active material (first SiO, second SiO) | | | Conductive agent | | | | | |
|---|---|---|---|---|---|---|---|---|---|
| | | | | Carbon nanotubes | | | | | Carbon black |
| | D₅₀ of first SiO (µm) | D₅₀ of second SiO (µm) | Weight ratio of first SiO to second SiO | Type of carbon nanotu bes | Averag e diamet er (nm) | Averag e length (µm) | Specif ic surfac e area (m²/g) | Amount in negative electrod e active material layer (wt%) | Amount in negative electrod e active material layer (wt%) |
| Example 1 | 0.2 | 7 | 1:19 | SWCNT | 5 | 8 | 700 | 0.1 | - |
| Example 2 | 0.2 | 7 | 1:4 | SWCNT | 5 | 8 | 700 | 0.1 | - |
| Example 3 | 0.2 | 7 | 1:19 | SWCNT | 10 | 15 | 900 | 0.1 | - |
| Example 4 | 0.2 | 7 | 1:4 | SWCNT | 10 | 15 | 900 | 0.1 | - |
| Example 5 | 0.5 | 5 | 1:19 | SWCNT | 5 | 8 | 700 | 0.1 | - |
| Example 6 | 0.5 | 5 | 1:19 | SWCNT | 10 | 15 | 900 | 0.1 | - |
| Example 7 | 0.2 | 7 | 1:19 | SWCNT | 5 | 8 | 700 | 0.3 | - |
| Example 8 | 0.2 | 7 | 1:19 | SWCNT | 5 | 8 | 700 | 0.002 | - |

**[Table 2]**

| | Negative electrode | Conductive agent | | | | | | | |
|---|---|---|---|---|---|---|---|---|---|
| | active material (first SiO, second SiO) | | | Carbon nanotubes | | | | | Carbon black |
| | D₅₀ of first SiO (µm) | D₅₀ of second SiO (µm) | Weight ratio of first SiO to second SiO | Type of carbon nanotu bes | Averag e diamet er (nm) | Averag e length (µm) | Specif ic surfac e area (m²/g) | Amount in negative electrod e active material layer (wt%) | Amount in negative electrod e active material layer (wt%) |
| Comparativ e Example 1 | 0.2 | 7 | 1:19 | MWCNT | 45 | 1.5 | 100 | 0.1 | - |
| Comparativ e Example 2 | 0.2 | 7 | 1:19 | MWCNT | 45 | 1.5 | 100 | 0.5 | - |
| Comparativ e Example 3 | 0.2 | - | 100:0 | SWCNT | 5 | 8 | 700 | 0.1 | - |
| Comparativ e Example 4 | - | 7 | 0:100 | SWCNT | 5 | 8 | 700 | 0.1 | - |
| Comparativ e Example 5 | 0.2 | 7 | 1:19 | - | - | - | - | - | 1 |
| Comparativ e Example 6 | 0.05 | 7 | 1:19 | SWCNT | 5 | 8 | 700 | 0.1 | - |
| Comparativ e Example 7 | 1 | 7 | 1:19 | SWCNT | 5 | 8 | 700 | 0.1 | - |
| Comparativ e Example 8 | 0.2 | 2 | 1:19 | SWCNT | 5 | 8 | 700 | 0.1 | - |
| Comparativ e Example 9 | 0.2 | 10 | 1:19 | SWCNT | 5 | 8 | 700 | 0.1 | - |
| Comparativ e Example 10 | 0.2 | 7 | 1:1 | SWCNT | 5 | 8 | 700 | 0.1 | - |
| Comparativ e Example 11 | 0.2 | 7 | 1:150 | SWCNT | 5 | 8 | 700 | 0.1 | - |

### Experimental Examples

### Experimental Example 1: Life Characteristics (Capacity Retention) Evaluation

The batteries of the examples and the comparative examples were charged and discharged to evaluate life characteristics (capacity retention), and the results thereof are presented in Table 3 below.

Charge and discharge were performed at 0.1 C in a 1^{st} cycle and a 2^{nd} cycle, and charge and discharge were performed at 0.5 C from a 3^{rd} cycle to a 100^{th} cycle.
Charging conditions: CC (constant current)/CV (constant voltage), 5 mV/0.005 C current cut-off
Discharging conditions: CC (constant current) condition, 1.5 V cut-off
Capacity retention was derived by the following calculation. Capacity retention(%) = (100th cycle discharge capacity / 1st cycle discharge capacity) ×100

### Experimental Example 2: Initial Efficiency Evaluation

One cycle of charge and discharge was performed on the batteries of the examples and the comparative examples under the following conditions to evaluate initial efficiency, and the results thereof are presented in Table 3 below.
Charging conditions: 0.1 C, CC (constant current)/CV (constant voltage), 5 mV/0.005 C current cut-off
Discharging conditions: 0.1 C, CC (constant current) condition, 1.5 V cut-off
Initial efficiency was derived by the following calculation. Initial efficiency(%) = (1st cycle discharge capacity / 1st cycle charge capacity) ×100

**[Table 3]**

| | Capacity retention (%) | Initial efficiency (%) |
|---|---|---|
| Example 1 | 98 | 76 |
| Example 2 | 97 | 75 |
| Example 3 | 98 | 76 |
| Example 4 | 97 | 75 |
| Example 5 | 95 | 76 |
| Example 6 | 95 | 76 |
| Example 7 | 94 | 75 |
| Example 8 | 93.5 | 76 |
| Example 9 | 98 | 82 |
| Comparative Example 1 | 87 | 76 |
| Comparative Example 2 | 85 | 75 |
| Comparative Example 3 | 92 | 74 |
| Comparative Example 4 | 90 | 76 |
| Comparative Example 5 | 78 | 76 |
| Comparative Example 6 | 79 | 72 |
| Comparative Example 7 | 81 | 75 |
| Comparative Example 8 | 83 | 74 |
| Comparative Example 9 | 85 | 74 |
| Comparative Example 10 | 69 | 68 |
| Comparative Example 11 | 87 | 75 |

| | | |
|---|---|---|
| *SWCNT: Single-walled carbon nanotubes *MWCNT: Multi-walled carbon nanotubes | | |

The D₅₀ was measured through a laser diffraction method, and the specific surface area was measured according to a BET method. The average diameter and the average length each mean an average value of values of 100 carbon nanotubes which were obtained by SEM observation of the negative electrode.

According to Table 3, it may be confirmed that the batteries of the examples exhibited better life performance than the batteries of the comparative examples.

With respect to Example 9, since the metal was disposed on the surface and/or inside of the first SiO and the second SiO, it may be confirmed that the life performance and the initial efficiency were simultaneously improved.

## Claims

1. A negative electrode which comprises a negative electrode active material layer comprising a negative electrode active material and a conductive agent,
wherein the negative electrode active material comprises a first active material and a second active material,
wherein the first active material comprises SiOₓ particles (0<x<2), and
the second active material comprises SiO_{y} particles (0<y<2),
wherein the SiOₓ particles have a D₅₀ measured by laser diffraction of 0.1 µm to 0.6 µm,
the SiO_{y} particles have a D₅₀ measured by laser diffraction of 3 µm to 8 µm,
a weight ratio of the SiOₓ particles to the SiO_{y} particles is in a range of 1:2 to 1:100, and
the conductive agent comprises single-walled carbon nanotubes.

2. The negative electrode of claim 1, wherein the weight ratio of the SiOₓ particles to the SiO_{y} particles is in a range of 1:10 to 1:20.

3. The negative electrode of claim 1, wherein a ratio of the D₅₀ of the SiOₓ particles to the D₅₀ of the SiO_{y} particles is in a range of 1:5 to 1:40.

4. The negative electrode of claim 1, wherein a BET specific surface area of the SiOₓ particles is in a range of 1 m²/g to 10 m²/g, and
a BET specific surface area of the SiO_{y} particles is in a range of 4 m²/g to 20 m²/g.

5. The negative electrode of claim 1, wherein the first active material further comprises a metal disposed on a surface, inside, or on the surface and the inside of the SiOₓ particle, and
the metal comprises at least one selected from the group consisting of lithium (Li), magnesium (Mg), calcium (Ca), and aluminum (Al).

6. The negative electrode of claim 5, wherein the metal is included in an amount of 0.1 wt% to 30 wt% in the first active material.

7. The negative electrode of claim 1, wherein the second active material further comprises a metal disposed on a surface, inside, or on the surface and the inside of the SiO_{y} particle, and
the metal comprises at least one selected from the group consisting of Li, Mg, Ca, and Al.

8. The negative electrode of claim 7, wherein the metal is included in an amount of 0.1 wt% to 30 wt% in the second active material.

9. The negative electrode of claim 1, wherein the single-walled carbon nanotubes have an average length of 2 µm to 100 µm.

10. The negative electrode of claim 1, wherein the single-walled carbon nanotubes have an average length of 3 µm to 20 µm.

11. The negative electrode of claim 1, wherein the single-walled carbon nanotubes have a BET specific surface area of 500 m²/g to 1,500 m²/g.

12. The negative electrode of claim 1, wherein the single-walled carbon nanotubes are included in an amount of 0.001 wt% to 0.5 wt% in the negative electrode active material layer.

13. The negative electrode of claim 1, wherein the negative electrode active material further comprises a carbon-based active material.

14. A secondary battery comprising the negative electrode of claim 1.

## Patentansprüche

1. Negative Elektrode, die eine Negativelektroden-Aktivmaterialschicht umfasst, die ein Negativelektroden-Aktivmaterial und ein leitfähiges Mittel umfasst,
worin das Negativelektroden-Aktivmaterial ein erstes Aktivmaterial und ein zweites Aktivmaterial umfasst,
worin das erste Aktivmaterial SiOₓ-Partikel (0<x<2) umfasst und
das zweite Aktivmaterial SiO_{y}-Partikel (0<y<2) umfasst,
worin die SiOₓ-Partikel einen mittels Laserstreuung gemessenen D₅₀ von 0,1 µm bis 0,6 µm aufweisen,
worin die SiO_{y}-Partikel einen mittels Laserstreuung gemessenen D₅₀ von 3 µm bis 8 µm aufweisen,
worin das Gewichtsverhältnis der SiOₓ-Partikel zu den SiO_{y}-Partikeln im Bereich von 1:2 bis 1:100 liegt und
das leitfähige Mittel einwandige Kohlenstoff-Nanoröhrchen umfasst.

2. Negative Elektrode gemäß Anspruch 1, worin das Gewichtsverhältnis der SiOₓ-Partikel zu den SiO_{y}-Partikeln im Bereich von 1:10 bis 1:20 liegt.

3. Negative Elektrode gemäß Anspruch 1, worin das Verhältnis des D₅₀ der SiOₓ-Partikel zu dem D₅₀ der SiO_{y}-Partikel im Bereich von 1:5 bis 1:40 liegt.

4. Negative Elektrode gemäß Anspruch 1, worin die spezifische BET-Oberfläche der SiOₓ-Partikel im Bereich von 1 m²/g bis 10 m²/g liegt und
die spezifische BET-Oberflächen der SiO_{y}-Partikel im Bereich von 4 m²/g bis 20 m²/g liegt.

5. Negative Elektrode gemäß Anspruch 1, worin das erste Aktivmaterial ferner ein Metall umfasst, das auf einer Oberfläche, innerhalb, oder auf der Oberfläche und innerhalb der SiOₓ-Partikel vorgesehen ist, und
worin das Metall zumindest eines umfasst, das ausgewählt ist aus der Gruppe, bestehend aus Lithium (Li), Magnesium (Mg), Calcium (Ca) und Aluminium (Al).

6. Negative Elektrode gemäß Anspruch 5, worin das Metall in dem ersten Aktivmaterial in einer Menge von 0,1 Gew.-% bis 30 Gew.-% enthalten ist.

7. Negative Elektrode gemäß Anspruch 1, worin das zweite Aktivmaterial ferner ein Metall umfasst, das auf einer Oberfläche, innerhalb, oder auf der Oberfläche und innerhalb der SiO_{y}-Partikel vorgesehen ist und worin das Metall zumindest eines umfasst, das ausgewählt ist aus der Gruppe, bestehend aus Li, Mg, Ca und Al.

8. Negative Elektrode gemäß Anspruch 7, worin das Metall in dem zweiten Aktivmaterial in einer Menge von 0,1 Gew.-% bis 30 Gew.-% enthalten ist.

9. Negative Elektrode gemäß Anspruch 1, worin die einwandigen Kohlenstoff-Nanoröhrchen eine mittlere Länge von 2 µm bis 100 µm aufweisen.

10. Negative Elektrode gemäß Anspruch 1, worin die einwandigen Kohlenstoff-Nanoröhrchen eine mittlere Länge von 3 µm bis 20 µm aufweisen.

11. Negative Elektrode gemäß Anspruch 1, worin die einwandigen Kohlenstoff-Nanoröhrchen eine spezifische BET-Oberfläche von 500 m²g bis 1.500 m²/g aufweisen.

12. Negative Elektrode gemäß Anspruch 1, worin die einwandigen Kohlenstoff-Nanoröhrchen in der Negativelektroden-Aktivmaterialschicht in einer Menge von 0,001 Gew.-% bis 0,5 Gew.-% enthalten sind.

13. Negative Elektrode gemäß Anspruch 1, worin das Negativelektroden-Aktivmaterial ferner ein Aktivmaterial auf Kohlenstoffbasis umfasst.

14. Sekundärbatterie, umfassend die negative Elektrode gemäß Anspruch 1.

## Revendications

1. Électrode négative qui comprend une couche de matériau actif d'électrode négative comprenant un matériau actif d'électrode négative et un agent conducteur,
dans laquelle le matériau actif d'électrode négative comprend un premier matériau actif et un second matériau actif,
dans laquelle le premier matériau actif comprend des particules de SiOₓ (0<x<2), et le second matériau actif comprend des particules de SiO_{y} (0<y<2),
dans laquelle les particules de SiOₓ présentent un D₅₀ mesuré par diffraction laser de 0,1 µm à 0,6 µm,
les particules de SiO_{y} présentent un D₅₀ mesuré par diffraction laser de 3 µm à 8 µm, un rapport de poids des particules de SiOₓ aux particules de SiO_{y} est dans une plage de 1:2 à 1:100, et
l'agent conducteur comprend des nanotubes de carbone à paroi unique.

2. Électrode négative selon la revendication 1, dans laquelle le rapport de poids des particules de SiOₓ aux particules de SiO_{y} est dans une plage de 1:10 à 1:20.

3. Électrode négative selon la revendication 1, dans laquelle un rapport du D₅₀ des particules de SiOₓ au D₅₀ des particules de SiO_{y} est dans une plage de 1:5 à 1:40.

4. Électrode négative selon la revendication 1, dans laquelle une aire spécifique BET des particules de SiOₓ est dans une plage de 1 m²/g à 10 m²/g, et
une aire spécifique BET des particules de SiO_{y} est dans une plage de 4 m²/g à 20 m²/g.

5. Électrode négative selon la revendication 1, dans laquelle le premier matériau actif comprend en outre un métal disposé sur une surface, l'intérieur, ou sur la surface et l'intérieur de la particule de SiOₓ, et
le métal comprend au moins l'un sélectionné dans le groupe consistant en lithium (Li), magnésium (Mg), calcium (Ca), et aluminium (Al).

6. Électrode négative selon la revendication 5, dans laquelle le métal est inclus dans une quantité de 0,1 %pds à 30 %pds dans le premier matériau actif.

7. Électrode négative selon la revendication 1, dans laquelle le second matériau actif comprend en outre un métal disposé sur une surface, l'intérieur, ou sur la surface et l'intérieur de la particule de SiO_{y}, et
le métal comprend au moins un sélectionné dans le groupe consistant en Li, Mg, Ca, et Al.

8. Électrode négative selon la revendication 7, dans laquelle le métal est inclus dans une quantité de 0,1 %pds à 30 %pds dans le second matériau actif.

9. Électrode négative selon la revendication 1, dans laquelle les nanotubes de carbone à paroi unique présentent une longueur moyenne de 2 µm à 100 µm.

10. Électrode négative selon la revendication 1, dans laquelle les nanotubes de carbone à paroi unique présentent une longueur moyenne de 3 µm à 20 µm.

11. Électrode négative selon la revendication 1, dans laquelle les nanotubes de carbone à paroi unique présentent une aire spécifique BET de 500 m²/g à 1500 m²/g.

12. Électrode négative selon la revendication 1, dans laquelle les nanotubes de carbone à paroi unique sont inclus dans une quantité de 0,001 %pds à 0,5 %pds dans la couche de matériau actif d'électrode négative.

13. Électrode négative selon la revendication 1, dans laquelle le matériau actif d'électrode négative comprend en outre un matériau actif à base de carbone.

14. Batterie secondaire comprenant l'électrode négative selon la revendication 1.
